**Europäisches Patentamt**

**European Patent Office**

**Office européen des brevets**

(11) Veröffentlichungsnummer: **0 035 243**
**B1**

(12) **EUROPÄISCHE PATENTSCHRIFT**

(45) Veröffentlichungstag der Patentschrift: **07.05.86**

(21) Anmeldenummer: **81101402.6**

(22) Anmeldetag: **26.02.81**

(51) Int. Cl.⁴: **B 03 D 1/14, B 03 D 1/24, C 02 F 3/12, C 02 F 1/24**

(54) **Verfahren und Vorrichtung zur Flotation.**

(30) Priorität: **05.03.80 DE 3008476**

(43) Veröffentlichungstag der Anmeldung:
**09.09.81 Patentblatt 81/36**

(45) Bekanntmachung des Hinweises auf die
Patenterteilung:
**07.05.86 Patentblatt 86/19**

(84) Benannte Vertragsstaaten:
**AT BE CH DE FR GB LI NL**

(56) Entgegenhaltungen:
**DE-A-1 642 838**
**DE-A-2 634 496**
**DE-A-2 725 592**
**DE-B-1 236 432**
**DE-B-2 738 782**
**DE-C- 363 816**
**FR-A- 757 461**
**FR-A-1 531 552**
**FR-A-2 355 554**
**GB-A- 538 996**
**US-A-2 342 024**
**US-A-2 446 655**
**US-A-3 828 935**

(73) Patentinhaber: **BAYER AG**
**Konzernverwaltung RP Patentabteilung**
**D-5090 Leverkusen 1 Bayerwerk (DE)**

(72) Erfinder: **Zlokarnik, Marko, Prof. Dr.**
**Wolfskaul 5**
**D-5000 Köln 80 (DE)**

Courier Press, Leamington Spa, England.

## Beschreibung

Die vorliegende Erfindung betrifft ein Verfahren und eine Vorrichtung zur Flotation.

Die Begasungsvorrichtung in einer Flotationszelle hat in der Regel zwei Aufgaben zu erfüllen: das Zerteilen des Gasdurchsatzes in feinste Primärgasblasen sowie den Aufbau eines Scherkräftefeldes, welches bewirkt, daß die Feststoffpartikel der Trübe an die Gasblasen angelagert werden. Man verwendet dazu bevorzugt Rührer nach dem Rotor/Stator-Prinzip, weil diese eine hohe Energiedissipationsdichte auf kleinstem Raum erzeugen, außerhalb des Stators jedoch eine vergleichsweise schwache Flüssigkeitsbewegung bewirken. Letzteres ist notwendig, damit die im Mischraum innerhalb des Statorringes erfolgte Bindung zwischen den Festsoffteilchen und den Gasblasen beim Aufsteigen der Gasblasen zur Oberfläche nicht verloren geht.

Rührer nach dem Rotor/Stator-Prinzip sind z.B. in Ullmann, Encyklopädie der techn. Chemie, Band 2, 1972 beschrieben und werden entweder als selbsttätig gasansaugend asugeführt, oder das Gas wird ihnen über ein gesondertes Gasförderorgan zugeführt. Da die Rührerdrehzahl unter üblichen großtechnischen Bedingungen nicht frei variiert wird, ist hier der Gasdurchsatz der einzige frei wählbare Prozeßparameter, der zur Anpassung des Gaszerteilers an den Flotationsvorgang zur Verfügung steht. Diese Einschränkung in der Variation der Prozeßparameter ist zweifelsohne als ein apparativer Nachteil der Rührer nach dem Rotor/Stator-Prinzip zur werten.

Ein weiterer Nachteil der Rührer nach dem Rotor/Stator-Prinzip ist in ihrem relativ komplizierten Aufbau zu sehen, der eine hohe Verschleißanfälligkeit bedingt. Auch die Lagerung der Rührwelle innerhalb der Trübe vergrößert bei vielen Rührertypen die Störanfälligkeit des Apparates.

Die erwähnten Nachteile dieser Gaszerteiler für Flotationszellen sind wohl der Grund dafür, daß man bereits seit Jahren bemüht ist, eine sogenannte "rührerlose" Flotationszelle zu entwickeln, vgl. z.B. P. John, Aufbereitungstechnik 5 (1964) 10, S. 532—543. Die Ursache, daß sich solche Zellen nur in Ausnahmefällen durchgesetzt haben, ist sicherlich darin zu suchen, daß die alternativ verwendeten Begasungsvorrichtungen zwar in der Lage sind, feine Gasblasen zu erzeugen, aber es fehlt entweder das zum Koppelvorgang Blase-Feststoffteilchen benötigte Scherkräftefeld oder aber die durch die Begasungsvorrichtung erzeugte Flüssigkeitszirkulation in der Zelle ist so stark, daß beim Blasenaufstieg zur Oberfläche der Kontakt Blase-Feststoffpartikel verloren geht.

Aus dem letztgenannten Grund sind z.B. die üblichen Zweistoffdüsen, wie z.B. Injektoren, Ejektoren, Venturi-Düsen oder Strahldüsen, wie sie z.B. in der DE—B—2 458 449, DE—B—2 166 595, DE—A—2 410 570, DE—A—2 408 064 und DE—A—2 634 494 beschrieben sind, als Begasungsvorrichtungen für Flotationszellen nicht geeignet; sie erzeugen nämlich einen energiereichen Freistrahl der Dispersion Gas/Flüssigkeit, welcher zwar zum Stofftransport (Absorptionsvorgang) zwischen der Gasphase und der Flüssigkeit günstig ist, jedoch eine starke Turbulenz in der umgebenden Flüssigkeit bewirkt.

Nach der FR—A 23 55 554 sollen die Schwierigkeiten, die die hohe kinetische Energie des Flüssigkeitstreibstrahles bei der Anwendung von Zweistoffdüsen bei der Flotation bereitet, dadurch überwunden werden, daß die in der Zweistoffdüse erzeugt Gasblasendispersion hoher Geschwindigkeit bei ihrem Austritt aus der Düse eine scharfe Richtungsumlenkung erfährt, so da— die Gasblasen aus der schnellen Flüssigkeitsströmung heraus in weniger bewegte Bereiche der Flotationszelle gedrückt werden. Durch diese vorbekannten Flotationsinjektoren werden jedoch nur sehr wenige Gasblasen für die Flotation zur Verfügung gestellt, da einerseits nur wenig Gas vom Treibstrahl dispergiert wird und andererseits von dem dispergierten Gas bei der Strahlumlenkung nur ein Teil der insbesondere größeren Gasblasen in die weniger bewegte Flüssigkeit des Flotationsbeckens übertragen wird.

Aufgabe der vorliegenden Erfindung ist es, spezielle Injektoren zur Verfügung zu stellen, die bei einem Gasdurchsatz in der Größenordnung von 10% bis 50% des Flüssigkeitsdurchsatzes feinste Gasblasen und wenig Turbulenz im Flotationsbehälter erzeugen.

Gegenstand der vorliegenden Erfindung ist daher ein Injektor mit konvergierend-divergierendem Mischraum für den Einsatz beim Flotationsverfahren, wobei der Mischraum konzentrisch um ein axiales kegelförmiges Umlenkelement ausgebildet ist, der dadurch gekennzeichnet ist, daß die Flüssigkeitstreibstrahldüse axial innerhalb der Gasansaugleitung angeordnet ist, das Umlenkelement an der Spitze einen Winkel von 60—150° und an der Basis den 5- bis 10-fachen Durchmesser der Treibstrahldüse aufweist.

Die erfindungsgemäßen Injektoren werden in der nachfolgenden Beschreibung auch Trichterdüsen genannt.

Erfindungsgemäß können diese Trichterdüsen z.B. bei der Erzaufbereitung, der Abwasserreinigung, und zwar sowohl von kommunalem als auch industriellem Abwasser, sowie allgemein zur Trennung im System fest/flüssig bzw. flüssig/flüssig bei chemischen Prozessen, z.B. bei der Farbstoffherstellung, d.h. zur Feststoffabtrennung durch Flotation, verwendet werden. Bei der Abwasserreinigung werden die erfindungsgemäßen Trichterdüsen zur Flotation von Feststoffen, wie z.B. Belebtschlamm oder Biomasse oder von festen, also auch geflockten bzw. gefällten Abwasserinhaltsstoffen, eingesetzt. Erfindungsgemäß werden die neuen Injektoren aber auch zur flotativen Abtrennung von flüssigen, wasserunlöslichen Bestandteilen, wie z.B. Fetten, Ölen, Wachsen, aus wäßrigen Lösungen eingesetzt.

Das Umlenkelement besitzt kegelförmige Gestalt, der Kegelwinkel beträgt je nach vorgesehenem Einsatzgebiet 60—150 Grad. Der Kegelmantel muß jedoch nicht notwendigerweise gerade, sondern kann mehr oder weniger konkav ausgebildet sein.

Die vorliegende Erfindung macht von der Lehre der DE—A—2 634 496 Gebrauch wo spezielle Injektoren zum Gaszerteilen in Flüssigkeiten beschrieben sind, denen ein Umlenkungselement in der Achse der Treibstrahldüse gemeinsam ist, welches bewirkt, daß der Flüssigkeitreibstrahl vor dem Mischraum umgelenkt und aufgefächert wird.

Dank dieser Maßnahme nimmt ein größerer Anteil des Flüssigkeitsdurchsatzes am Gaszerteilen teil, als es sonst der Fall wäre. Bei einigen speziellen Ausführungsformen dieser Düsen in der genannten DE-A wird der Flüssigkeitstreibstrahl mittels eines Rotationskörpers mit parabolischkonkavem Profil aufgefächert, umgelenkt und über den ganzen Querschnitt eines trichterförmigen Mischraumes gleichmäßig verteilt. Der Gasdurchsatz, welcher durch diesen Mischraum geleitet wird, wird hier innig mit der Flüssigkeit vermischt und verläßt ihn auf dem ganzen Umfang in Form eines Freistrahls der Dispersion Gas/Flüssigkeit, welcher nach Abgabe seiner kinetischen Energie an die Umgebungsflüssigkeit in einen Gasblasenschwarm zerfällt.

Versuche mit einer gegenüber DE—A 2 634 496, Fig. 10, modifizierten Ausführung dieser Begasungsvorrichtung haben nämlich überraschenderweise gezeigt, daß unter bestimmten Betriebsbedingungen die kinetische Energie des Flüssigkeitstreibstrahls infolge der Strahlumlenkung, Dispergierwirkung und Querschnittserweiterung so weit verbraucht wird, daß nur ein kurzer, energieschwacher Freistrahl resultiert, welcher die Flüssigkeitsströmung im Behälter sogar weniger beeinflußt als jener, welcher von einem Rührer nach dem Stator/Rotor-Prinzip ausgestoßen wird.

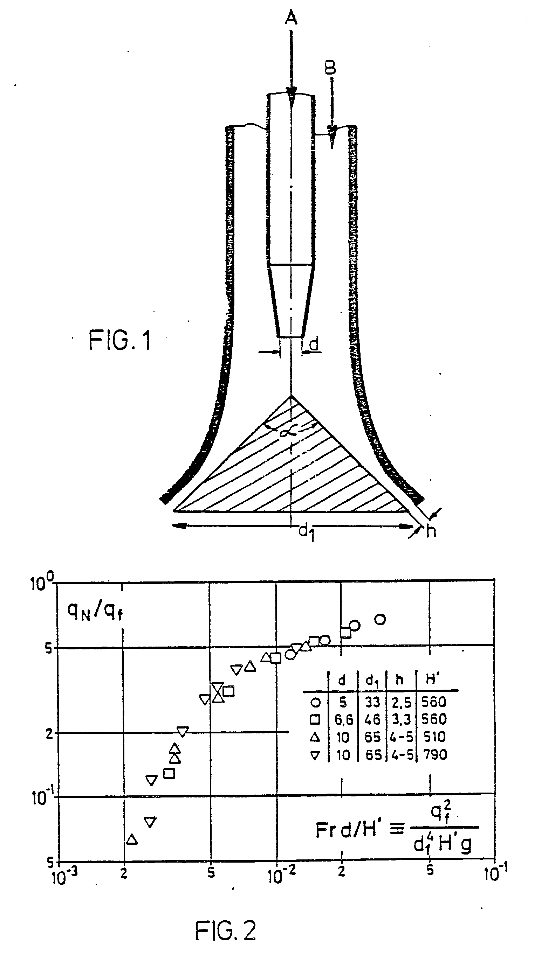

Bei der gleichen Energiedissipationsdichte werden mit beiden Vorrichtungen auch die gleichen Gasblasengrößenverteilungen erzielt. Dazu wurde in einem Behälter von 150 l Flüssigkeitsvolumen die Sorptions-Charakteristik eines Rührers nach dem Stator/Rotor-Prinzip (Scheibenrührer mit 12 Schaufeln, Schaufelhöhe 16 mm, Rührerdurchmesser 80 mm; Schaufelkranz von 24 Schaufeln) sowie die einer Trichterdüse (entsprechend der Fig. 1, Treibstrahldüsen-Durchmesser $d=10$ mm, Durchmesser des Umlenkelementes $d_1=60$ mm; Ringspalthöhe $h=5$ mm) ermittelt, wobei mit dem Stoffsystem Wasser/Luft unter stationären Versuchsbedingungen (sogenannte "Hydrazin-Methode"; vgl. M. Zlokarnik, Advances of Biochem. Engng. 8 (1978), 133—151) gearbeitet und das Koaleszenzverhalten des Stoffsystems durch Kochsalzzugabe variiert wurde. Die Ergebnisse dieser Messungen sind in dimensionsloser Form in Fig. 2 graphisch wiedergegeben. Auf der Ordinate ist die Sorptions-Kennzahl Y für Rührbehälter aufgetragen, welche die bei Rührbehältern und konstanter Energiedissipationsdichte zutreffende Proportionalität zwischen dem Transportkoeffizienten $k_L a$ (a=volumenbezogene Phasengrenzfläche, $k_L$=flüssigkeitsseitiger Stoffüberganskoeffizient) und dem volumenbezogenen Gasdurchsatz q/V (q=Gasdurchsatz, V=Volumen) wiederspiegelt (vgl. M. Zlokarnik, Chem.-Ing.-Tech. 47 (1975) 7, 281—282 und Advances of Biochem. Eng. 8 (1978), 133—151). Auf der Abszisse ist die Gasdispergier-Kennzahl X aufgetragen, welche in dimenssionsloser Form die gasdurchsatzbezogene Netto-Leistung P/q (P=Leistung) des Rührers bzw. des Flüssigkeitsstrahls wiedergibt, die zur Dispersion des Gasdurchsatzes aufgewendet wurde (ρ=Dichte der Flüssigkeit, v=kinematische Viskosität der Flüssigkeit, g=Erdbeschleunigung). Aus dem Zusammenhang Y (X) für verschiedene Koaleszenzgrade des Systems (ausgedrückt mit der Kochsalzkonzentration des Wassers), ist ersichtlich, daß bei größer/gleich 5 g NaCl/l die Abhängigkeiten Y (X) für beide Vorrichtungen (C-Rührer, D-Düse) praktisch identisch sind, was praktisch gleich Blasengrößenverteilungen bedeutet. Dies bedeutet: Die Trichterdüse erzeugt die gleichen Primärblasen wie der Rührer nach dem Stator/Rotor-Prinzip. Nur im System reines Wasser/Luft liefert der Rührer höhere Y-Werte als die Trichterdüse. Dieser Sachverhalt ist damit zu erklären, daß der Rührer gegenüber der Düse eine stärkere Flüssigkeitsumströmung im Behälter bewirkt, die den Gasblasen eine längere Verweilzeit aufzwingt. Eine längere Verweilzeit ist für den Flotations-verlauf jedoch nachteilig.

Die Verwendung einer Trichterdüse als Begasungsvorrichtung für Flotationszellen bietet gegenüber den Rührern nach dem Stator/Rotor-Prinzip viele Vorteile. So hat die Trichterdüse nämlich zwei frei wählbare Proze—parameter, den Gasdurchsatz und den Flüssigkeitsdurchsatz. Der Flüssigkeitsdurchsatz läßt sich über einen Bypass leicht regeln. Wie aus Fig. 1 ersichtlich hat die Trichterdüse eine äußerst einfache Form; das dem Verschleiß stärker unterliegende Umlenkelement läßt sich bei Bedarf einfach ersetzen.

Außer den beiden frei wählbaren Prozeßparametern verfügt die Trichterdüse noch über einen frei wälbaren geometrischen Parameter, weil nämlich durch eine, gegebenenfalls auch während des Betriebs äußerst einfach und von außen zu bewerkstelligende Veränderung des Abstandes zwischen dem Umlenkelement und dem Gehäuse die Ringspalthöhe beliebig veriiert werden kann. Damit kann die Trichterdüse den jeweiligen Anforderungen dei der Flotation optimal angepaßt werden, weil durch die Kanalbreite nicht nur das Sogverhalten der Trichterdüse, sondern auch die kinetische Energie des Freistrahles variiert werden kann.

Der Umstand, daß die Trichterdüse keine rotierenden Teile aufweist, ermöglicht eine einfache Abdichtung des Gasraumes nach außen. Dies erweist sich als besonders vorteilhaft bei der flotativen Behandlung von Abwässern chemischer Industrien, die oft flüchtige organische Medien enthalten und erlaubt außerdem bei Bedarf auch eine einfache Führung des Gases im Kreislauf.

Bedingt durch die große Anpassungsfähigkeit der Trichterdüse ist ihr Einsatzbereich keineswegs auf die Erzaufbereitung beschränkt; ihre Anwendung schließt vielmehr auch Einsatzgebiete ein, die bislang der Entspannungs- sowie der Elektroflotation vorbehalten blieben, nämlich die Abwasserreinigung sowie Feststoffabtrennung in der Biotechnologie sowie in der chemischen Technik.

Bei der Abwasserreinigung mittels Flotation sind wegen der relativ kleinen Dichteunterschiede zwischen den festen Abwasserinhaltsstoffen und Wasser und/oder wegen der winzigen Teilchen kleinste Gasblasen und verglichen mit anderen Einstazgebieten der Trichterdüsen ein geringer Gasdurchsatz nötig. Beides läßt sich mit der Trichterdüse mühelos realisieren, wobei diese vorteilhafterweise selbstansaugend ausgeführt ist (bei anderen Einstazgebieten ist jedoch auch das Einbringen des Gases unter Druck möglich). Der ringförmige Kanal zwischen Umlenkelement und Gehäuse muß eine genügende Länge aufweisen und so ausgebildet sein, daß er in Strömungsrichtung nacheinander die Funktion eines Konfusors (verjüngend) und eines Diffusors (erweiternd) erfüllt. Die einfachste Ausführungsform einer selbstansaugenden Trichterdüse zeigt Fig. 1. Bei A gelangt die Flüssigkeit und bei B das Gas in die Trichterdüse. Hier besteht das Umlenkelement aus einem Kegel, bei dem der Schnitt durch die Symmetrieachse ein Dreieck ergibt. Der Winkel der Kegelspize liegt zwuscgen ca. 60°—150°, vorzugsweise 60°—120°, besonders bevorzugt 90°—120°. Dies gilt auch für solche Kegel, deren Mantelfläche nicht linear, sondern konkav verläuft. Die Gehäusewandung läuft zunächst in einem spitzen Winkel auf den Umlenkkegel zu (Konfusor); danach bleibt die Spaltweite konstant, aber die Fläche des Ringraumes nimmt mit steigenden Durchmesser zu (Diffusor). Die Gasdurchsatz-Charakteristik einer solchen Trichterdüse ($\alpha=90°$) ist in ähnlichkeitstheoretischer Schreibweise (vgl. M. Zlokarnik, Chem.-Ing.-Techn. 38 (1966) 3, 357—366) in Fig. 2 dargestellt. Es handelt sich um Meßergebnisse an drei Trichterdüsen unterschiedlicher Durchmesser bei verschiedenen Spaltweiten h und Flüssigkeitsüberdeckungen H'/mm/. Man erkennt aus dieser Darstellung, daß bei allen drei Trichterdüsen selbstangesaugte Gasdurchsätze (bezogen auf Normbedingungen: 20°C und 1 bar) von 10%—50% des Flüssigkeitsdurchsatzes $q_f$ ($q_N/q_f=0, 1—0, 5$) leicht realisierbar sind.

Bei der technischen Ausführung einer Trichterdüse wird die Flüssigkeits-Treibstrahldüse zweckmäßigerweise als eine sogenannte Glattstrahldüse ausgeführt und besitzt einen Innendurchmesser von $d \geq 10$ mm, damit eine weitgehende Verstopfungsfreiheit garantiert ist. Aus gleichem Grunde soll die Höhe (h) des Ringspaltes (= Spaltweite) an keiner Stelle weniger als 5 mm betragen. Das Verhältnis von Kegeldurchmesser $d_1$ zu Düsenduchmesser d soll 5 bis 10 betragen.

Das in der Trichterdüse angeordnete Umlenkelement sollte eine kegelförmige Form besitzen; in Fig. 1 hat es die einfachste Form eines Kegels, dessen Winkel $\alpha=90°$ beträgt. Durch Veränderung dieses Winkels läßt sich bei gleichbleibendem Kegeldurchmesser die Kanallänge variieren und damit die Sog-Charakteristik der Trichterdüse beeinflussen. Je nach Einsatzgebiet kommen üblicherweise die vorstehend beschriebenen Kegelwinkel in Frage.

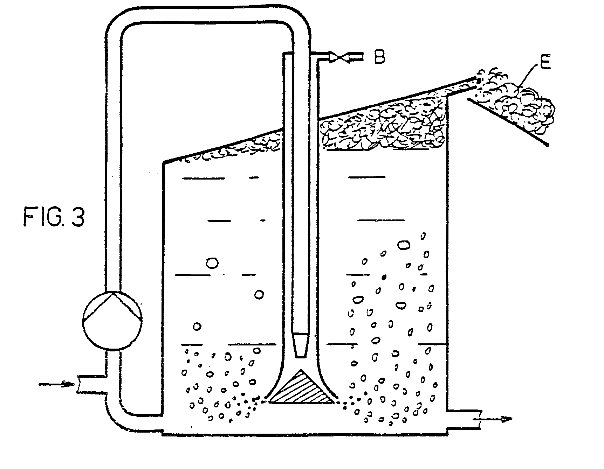

Fig. 3 zeigt die erfindungsgemäße Trichterdüse im Einsatz in einer Flotationszelle. Die Flotationszelle weist eine Abdeckung mit selbsttätigem Schaumaustrag E auf.

Der Anwendungsbereich der Flotation mit erfindungsgemäßer Trichterdüse und selbstättigem Austrag umfaßt alle Trennaufgaben im System fest/flüssig, bei denen eine schonende und/oder selektive Trennung von feinsten und/oder besonders leichten Partikeln oder Flocken gefordert wird. Diese Aufgabe liegt z.B. bei der Flotation von feinstgemahlenen Erzen oder bei der Kohle/Ton-Trennung ebenso vor, wie bei der Abtrennung und Aufkonzentrierung der Biomasse bei verschiedensten mikrobiologischen Prozessen sowie bei der biologischen Abwasserreinigung.

Ein wesentliches Einstzgebiet für die Flotation mit er findungsgemäßer Trichterdüse und selbsttätigem Schaumaustrag liegt in der chemischen Industrie. Dort wird sie sowohl zur mechanischen Abwasserreinigung im System flüssig/flüssig und flüssig/fest verwendet werden können, als auch eine sinnvolle Alternative zu den üblichen Trennverfahren für das System flüssig/fest sein, wenn die Teilchengröße der Festkörper kleiner/gleich 100 µm und die Feststoffkonzentration unter 20 g/l liegt. So wurden mit dem erfindungsgemäßen Verfahren u.a. bereits folgende Trennoperationen erfolgreich durchgeführt: Rückgewinnung von organischen und anorganischen Pigmenten sowie von Pflanzenschutzmitteln aus Prozeßwassern und Rückgewinnung von Raney-Nickel.

Das erfindungsgemäße Verfahren sowie die erfindungsgemäße Vorrichtung sollen durch die folgenden Beispiele noch näher erläutert werden. Die folgenden Beispiele wurden alle mit einer Zelle (300 mm Durchmesser, 300 mm Höhe) mit Trichterdüse (d=6,6 mm, $d_1$=43 mm, $\alpha=90°$) entsprechend Figur 1 durchgeführt und zeigen die Leistungsfähigkeit der erfindungsgemäßen Flotationszelle in anschaulicher Weise.

Beispiel 1

Flotation von Farbstoffpigmenten (wasserunlösliche Azofarbstoffe mit Teilchengröße im m-Bereich) aus Waschwassern der Produktion. Anfangskonzentration etwa 10 g/l. Flotationshilfsmittel: 20 mg eines kationsichen Polyelektrolyten je Gramm Farbstoff und 5 mg eines anionischen Sammlers je Gramm Farbstoff. Flüssigkeitsdurchsatz $q_{f_2}$ und selbstangesaugter Luftdurchsatz $q_n$ betrugen $q_n q_f = 0,03$ $m^9 h^{-3}$. Nach einer Versuchszeit von 30 min war der Farbstoff bis auf nicht mehr nachweisbare Mengen aus dem Waschwasser entfernt, so daß dieses für eine beliebige andere Waschung in Kreislaufführung verwendet werden konnte. Das Flotat hatte eine Farbstoffkonzentration von etwa 200 g/l.

Beispiel 2

Flotative Entfernung von Druckerschwärze aus dem Altpapier (Deinken). Vorgelegt wurde eine Papiermaschine (Tageszeitungen 2/3, Illustrierte 1/3) in einer Konzentration von 20 g/l. Als Flotationshilfsmittel wurden die beim Deinken üblichen Hilfsmittel (Schäumer, Sammler) eingesetzt. Kombination der Prozeßparameter: $q_n q_f^2 = 1,32$; 1,85; 2,65 $m^{9-3}$h. Die damit bewirkte Flotationsgeschwindigkeit läßt sich mit der Flotationsgeschwindigkeitskonstanten k $(min^{-1})$ beschreiben, der Vorgang verläuft nach dem Zeitgesetz 1. Ordnung. Die der obengenannten Kombinationen der Prozeßparameter entsprechenden k-Werte sind k=0,26; 0,38; 0,49 $(min^{-1})$. Damit wird belegt, daß zwischen k und $q_n q_f^2$ direkte Proportionalität herrscht. Um z.B. einen vorgeschriebenen 97 %igen Austrag der Druckerschwärze zu erhalten, wurden entsprechend den angegebenen Kombinationen der Prozeßparameter 13,5; 9,2; 7,2 Minuten Flotationszeit benötigt.

Beispiel 3

Flotative Entfernung von Bioschlamm aus gereinigtem Abwasser. Keine Flotationshilfsmittel; der Zusammenhang $k \sim q_n q_f^2$ wurde auch in diesem Fall bestätigt. Bei einer Anfangs-Schalammkonzentration von etwa 10 g/l wurde z.b. gefunden: k=0,1 $min^{-1}$ bei $q_n q_f^2 = 0,02$ $m^9 h^{-3}$.

Nach einer Flotationszeit von 30 Minuten lag in dem ablaufenden Abwasser nur noch eine Schlammkonzentration von 0,5 g/l vor. Dies entspricht einem 95 %igem Schlammaustrag. Die Schlammkonzentration im Flotat betrug 30 g/l.

**Patentansprüche**

1. Injektor mit konvergierend-divergierendem Mischraum für den Einsatz beim Flotationsverfahren, wobei der Mischraum konzentrisch um ein axiales kegelförmiges Umlenkelement ausgebildet ist, dadurch gekennzeichnet, daß die Flüssigkeitstreibstrahldüse axial innerhalb der Gasansaugleitung angeordnet ist, das Umlenkelement an der Spitze einen Winkel von 60—150° und an der Basis den 5- bis 10fachen Durchmesser der Treibstrahldüse aufweist.

2. Verfahren zur Flotation unter Einsatz eines Injektors nach Anspruch 1, dadurch gekennzeichnet, daß der Injektor selbstansaugend betrieben wird.

3. Verfahren nach Anspruch 2, dadurch gekennzeichnet, daß das Saugverhalten und die Energie des erzeugten Freistrahles durch axiale Verschiebung des Umlenkelementes geregelt werden.

**Claims**

1. Injector with converging-diverging mixing chamber for use in the flotation process, the mixing chamber being formed concentrically around an axial conical deflecting element, characterised in that the nozzle for the liquid driving jet is arranged axially inside the gas aspirating duct and the deflecting element has an angle of 60—150° at its apex and the diameter at its base is 5—10 times the diameter of the driving jet nozzle.

2. Process for flotation using an injector according to claim 1, characterised in that the injector is operated in a self-aspirating manner.

3. Process according to claim 2, characterized in that the suction behaviour and energy of the free jet produced are regulated by axial displacement of the deflecting element.

**Revendications**

1. Injecteur comportant un compartiment de mélange convergent/divergent destiné à être utilisé lors d'un procédé de flottation, ce compartiment de mélange étant réalisé concentriquement autour d'un élément déflecteur conique axial, caractérisé en ce que la buse à jet de propulsion de liquide est disposée axialement à l'intérieur de la conduite d'aspiration des gaz, tandis que l'élément déflecteur a, à son sommet, un angle de 60—150° et que, à sa base, il a un diamètre égal à 5—10 fois celui de la buse à jet de propulsion.

2. Procédé de flottation en utilisant un injecteur selon la revendication 1, caractérisé en ce que l'injecteur fonctionne en régime auto-aspirant.

3. Procédé selon la revendication 2, caractérisé en ce que le comportement à l'aspiration et l'énergie du jet libre produit sont réglés par décalage axial de l'élément déflecteur.

FIG. 1

$$Fr\,d/H' \equiv \frac{q_f^2}{d_1^4 H' g}$$

| | d | $d_1$ | h | H' |
|---|---|---|---|---|
| ○ | 5 | 33 | 2,5 | 560 |
| □ | 6,6 | 46 | 3,3 | 560 |
| △ | 10 | 65 | 4-5 | 510 |
| ▽ | 10 | 65 | 4-5 | 790 |

FIG. 2

FIG. 3